# EUROPÄISCHE PATENTSCHRIFT

(11) **EP 1 356 723 B1**
(45) Veröffentlichungstag und Bekanntmachung des Hinweises auf die Patenterteilung: **22.09.2004**
(21) Anmeldenummer: 03008327.3
(22) Anmeldetag: 10.04.2003
(51) Int. Cl.: A01K 5/02

(54) **Auslauf für Futtermittelförderleitung für die Aufzucht von Schweinen**
Outlet for a feed conveyor pipe for rearing pigs
Sortie d'une conduite pour le transport des produits d'alimentation pour l'élevage de porcs

(30) Priorität: 25.04.2002 DE 20206567 U
(43) Veröffentlichungstag der Anmeldung: 29.10.2003
(73) Patentinhaber: HAAKE, Hinrich, 22926 Ahrensburg (DE)
(72) Erfinder: HAAKE, Hinrich, 22926 Ahrensburg (DE)
(74) Vertreter: DIEHL GLAESER HILTL & PARTNER

(56) Entgegenhaltungen:
- EP-A- 1 004 236
- EP-A- 1 080 636
- FR-A- 2 660 155

## Beschreibung

Die Erfindung bezieht sich auf einen Auslauf einer zur Beschickung von Futtertrögen mit feststoffhaltiger Flüssigkeit dienenden Futtermittelförderleitung für eine Einrichtung für die Aufzucht von Schweinen, Ferkeln und Babyferkeln, vgl. z.B. die Druckschrift EP-A-1 080 636

Bei der Aufzucht von Ferkeln ist es üblich, über Rohrleitungen das in einem zentral angeordneten Mischbehälter zubereitete Flüssigfutter zu den einzelnen Trögen zu fördern und dazu Druckluft einzusetzen. Dies ist nicht ganz unproblematisch, da durch einen zu hohen Druck die Flüssigkeit nicht nur in den Fördertrog gelangt, sondern unter Umständen aus diesem wieder herausgeblasen wird.

Um dies zu verhindern wird gemäß dem Hauptanspruch ein Auslauf geschaffen, der dadurch charakterisiert ist, dass in dem Strömungsbereich hinter dem Endstück der Futtermittelförderleitung ein Prall- und Umlenkflächenteil für das Flüssigfutter angeordnet ist, und dass umgebend und mit Abstand zum Prallflächenteil eine nach unten offene Haube vorgesehen ist, die das durch den Prallflächenteil umgelenkte Flüssigfutter nach unten hin in den Futtertrog leitet.

Bei einer weiteren Ausführungsform eines Auslaufs der Erfindung ist eine ebene Prallfläche vorgesehen, die im Wesentlichen die Öffnung des Endstückes der Futtermittelförderleitung abdeckt. Die Prallfläche steht im Wesentlichen senkrecht zur Achse dieses Endstückes.

Weiterhin kann die Haube Quaderform annehmen, wenn der zugehörige Futtertrog quaderförmig ausgebildet ist. An beiden Seiten der Haube sind verstellbare Seitenbegrenzungsteile vorgesehen, durch die die nach unten weisende Öffnung der Haube vergrößert oder verkleinert werden kann, so wie dies für den zugehörigen Futtertrog erforderlich ist.

Durch die Prallfläche wird zunächst einmal erreicht, dass das Futter nicht direkt nach unten in den Trog abgegeben wird, sondern mit einer horizontalen Komponente aus dem im Wesentlichen sich vertikal nach unten erstreckenden Futtermittelförderleitungsrohr herausgeführt wird. Damit nun das Futtermittel in den zugehörigen Trog gebracht werden kann, ist eine Haube vorgesehen, die im Wesentlichen der Form des Troges entspricht. Handelt es sich um einen runden Trog, so ist es sinnvoll, die Haube zylinderförmig auszugestalten. Handelt es sich um einen länglichen Trog, so wird die Haube eine längliche Form haben, also die Form eines Quaders.

Die Erfindung wird nachstehend anhand der Zeichnungen beispielsweise erläutert.

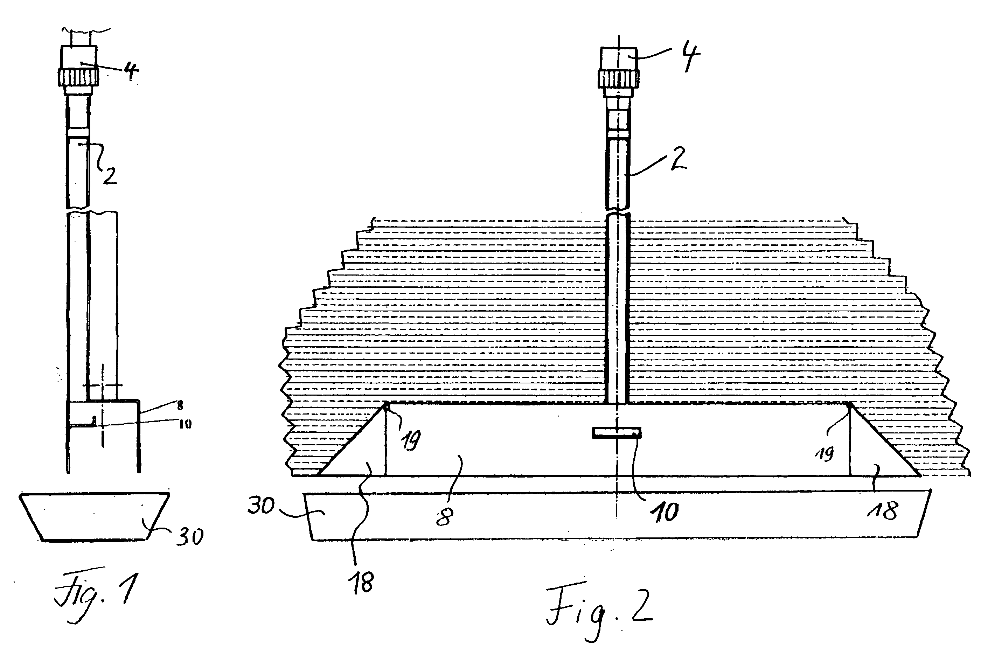

- Figur 1: zeigt eine seitliche Ansicht des Futtermittelauslaufs gemäß der Erfindung.
- Figur 2: zeigt eine zur Figur 1 im Winkel von 90° gehaltene Vorderansicht.

Die Futtermittelleitung ist mit 4 bezeichnet und ist über ein Rohrstück 2 mittels einer Verschraubung verbunden. Normalerweise läuft dieses Rohr 2 bei bekannten Einrichtungen in den Futtertrog 30 hinein. Gemäß der Erfindung ist jedoch m Strömungsbereich für das Futtermittel eine senkrecht zur Strömung ausgerichtete Prallfläche 10 vorgesehen. Umgebend zur Prallfläche und dem Auslauf des Rohres 2 befindet sich eine Haube 8, die in der dargestellten Ausführungsform Quaderform hat, jedoch zu beiden Schmalseiten mit schräg verlaufenden Teilen 18 ausgebildet ist, die in irgendeiner Weise verstellt werden können. In der gezeigten Ausführungsform sind die Seitenteile 18 um horizontale Umlenklinien 19 verschwenkbar, so dass derjenige Raum, der mit Futtermittel beaufschlagt werden kann, größer oder kleiner eingestellt werden kann.

Im Wesentlichen übemimmt die Haube die Funktion eines Diffusors, durch den das abgegebene Futtermittel über eine größere Fläche gleichmäßig verteilt wird.

## Patentansprüche

1. Auslauf einer zur Beschickung von Futtertrögen mit feststoffhaltiger Flüssigkeit dienenden Futtermittelförderleitung für eine Einrichtung für die Aufzucht von Schweinen, Ferkeln und Babyferkeln, **dadurch gekennzeichnet, dass** in dem Strömungsbereich hinter dem Endstück der Futtermittelförderleitung (2) ein Prall- und Umlenkflächenteil (10) für das Flüssigfutter angeordnet ist, und dass umgebend und mit Abstand zum Prallflächenteil eine nach unten offene Haube (8) vorgesehen ist, die das durch den Prallflächenteil umgelenkte Flüssigfutter nach unten hin in den Futtertrog (30) leitet.

2. Auslauf nach Anspruch 1, **dadurch gekennzeichnet, dass** der Prallflächenteil (10) mit einer ebenen Prallfläche (10) ausgebildet ist, die senkrecht zur Achse des Endstücks der Futtermittelförderleitung (2) ausgerichtet ist.

3. Auslauf nach Anspruch 1 oder 2, **dadurch gekennzeichnet, dass** die Haube (8) im Wesentlichen quaderförmig ausgebildet ist und in ihrer nach unten weisenden rechteckigen Öffnung an den nach oben weisenden Aufnahmebereich des Futtertrogs angepasst ist, und dass an beiden Schmalseiten der Haube verstellbare Seitenbegrenzungsteile (18) angeordnet sind, durch die die nach unten weisende Öffnung der Haube vergrößert oder verkleinert werden kann.

## Claims

1. Outlet of a feed conveyor line serving for the charging of feeding troughs with liquid containing solids for a device for the raising of pigs, piglets and baby piglets, **characterised in that** a baffle and deflector surface part (10) for the liquid feed is arranged in the flow area behind the end piece of the feed conveyor line (2), and that a hood (8) open towards the bottom is provided surrounding the and spaced from the baffle surface part, which guides the liquid feed deviated by the baffle surface part downwards into the feeding trough (30).

2. Outlet according to claim 1, **characterised in that** the baffle surface part (10) is formed with a plane baffle surface (10), which is oriented perpendicularly to the axis of the end piece of the feed conveyor line (2).

3. Outlet according to claims 1 or 2, **characterised in that** the hood (8) is formed substantially cuboid-shaped and is adjusted in its rectangular opening facing downwards to the reception area facing upwards of the feeding trough, and that side stops (18) are arranged at both narrow sides of the hood, by means of which the downwards facing opening of the hood can be enlarged or reduced.

## Revendications

1. Sortie d'une conduite d'acheminement d'aliments pour le bétail servant à alimenter des auges avec un liquide contenant des matières solides pour une installation pour l'élevage de porcs, porcelets et porcelets nouveaux-nés, **caractérisée en ce que** dans la zone d'écoulement sous la partie d'extrémité de la conduite d'acheminement d'aliments pour le bétail (2) est prévue une portion de surfaces convexe et de renvoi (10) pour l'aliment liquide, et **en ce que** autour et à distance de la portion de surface convexe est prévu un couvercle (8) ouvert vers le bas, qui conduit l'aliment liquide dévié par la portion de surface convexe vers le bas dans l'auge (30).

2. Sortie selon la revendication 1, **caractérisée en ce que** la portion de surface convexe (10) est conçue avec une surface convexe plane (10), qui est dirigée perpendiculairement à l'axe de la partie d'extrémité de la conduite d'acheminement d'aliments pour le bétail (2).

3. Sortie selon la revendication 1 ou 2, **caractérisée en ce que** le couvercle (8) est conçu de manière essentiellement rectangulaire et est adapté, dans son ouverture rectangulaire débouchant vers le bas, à la zone de réception de l'auge et en **en ce que** des portions de limitation de la paroi ajustables (18) sont affectées aux deux parois étroites du couvercle, portions par lesquelles l'ouverture débouchant vers le bas du couvercle peut être élargie ou rétrécie.
